# EUROPEAN PATENT APPLICATION

(11) **EP 3 121 699 A1**
(43) Date of publication of application: **25.01.2017**
(21) Application number: 16175764.6
(22) Date of filing: 22.06.2016
(51) Int. Cl.: G06F 3/0481

(54) **METHOD AND DEVICE FOR DISPLAYING BADGE OF ICON**

(30) Priority: 24.07.2015 CN 201510441327
(71) Applicant: Xiaomi Inc., Beijing 100085 (CN)
(72) Inventor: XIANGLI, Fei, Haidan District Beijing, 100085 (CN); QIAN, Zhuang, Haidan District Beijing, 100085 (CN); CHEN, Baoke, Haidan District Beijing, 100085 (CN)
(74) Representative: Hughes, Andrea Michelle

(57) **Abstract**

The present disclosure relates to a method and a device for displaying a badge of an icon for helping users to ease the visual fatigue due to inundant badges on a desktop. The method includes: when generating a badge of an icon, acquiring (S101, S201) feature information of the icon; determining (S102) a display element of the badge according to the feature information of the icon; and generating and displaying (S103, S204, S303, S403, S503) a badge having the display element at a preset position of the icon. According to the technical solutions of the present disclosure, different badge display elements are made for different applications so as to display badges having different display elements, which helps the users to ease the visual fatigue due to the inundant badges on the desktop.

## Description

### TECHNICAL FIELD

The present disclosure relates to the technical field of icon display, and more particularly, to a method and a device for displaying a badge of an icon.

### BACKGROUND

In a smart phone, when an application has a badge message, a badge (subscript) with a number will appear on an upper right corner of the application on a desktop. The badge serves as a notification mechanism to draw the attention of users.

In Android (Android system) and iOS (mobile operating system developed by Apple Inc) at present, colors and patterns of the badges for any application are consistent. For instance, the color and the pattern of the badge in the iOS system are stipulated as: a red lower layer encircled by a white border, with a white number on the lower layer.

### SUMMARY

In order to overcome the problems in the related art, the embodiments of the present disclosure provide a method and a device for displaying a badge of an application, which can display a badge of an icon in different styles.

According to a first aspect of the embodiments of the present disclosure, there is provided a method for displaying a badge of an icon, including:
when generating a badge of an icon, acquiring feature information of the icon;
determining a display element of the badge according to the feature information of the icon; and
generating and displaying a badge having the display element at a preset position of the icon.

In one embodiment, the acquiring the feature information of the icon includes: acquiring an application type corresponding to the icon; and the determining the display element of the badge according to the feature information of the icon includes:
determining a display element corresponding to the application type according to a preset corresponding relationship between the application type and the display element.

In one embodiment, the acquiring the feature information of the icon includes: acquiring a priority of an application corresponding to the icon; and the determining the display element of the badge according to the feature information of the icon includes:
determining a display element corresponding to the priority of the application according to a preset corresponding relationship between the priority of the application and the display element.

In one embodiment, the acquiring the feature information of the icon includes:
acquiring a color feature of the icon; and
the determining the display element of the badge according to the feature information of the icon includes:
using the color feature as a background color of the badge; and/or
using the color feature as a color of a word in the badge.

In one embodiment, the acquiring the color feature of the icon includes:
acquiring a color value having a highest occurrence number among color values of all pixels in a picture file of the icon, and using the color value having the highest occurrence number as the color feature of the icon; or
averaging color values of pixels with similar colors among all pixels in a picture file of the icon, and using the averaged value as the color feature of the icon.

In one embodiment, when an application corresponding to the icon is an application folder, the acquiring the color feature of the icon includes:
acquiring all picture files of all application icons in the application folder; and using a color value having a highest occurrence number among color values of all pixels in all the picture files as the color feature of the icon; or
acquiring all picture files of all application icons in the application folder; and averaging color values of pixels with similar colors among all the pixels in the picture files, and using the averaged value as the color feature of the icon.

In one embodiment, the determining the display element of the badge according to the feature information of the icon includes:
determining one or more of a shape of the badge, a background color of the badge, a color of a word in the badge, and a font of a word in the badge according to the feature information of the icon.

In one embodiment, the generating and displaying the badge having the display element at the preset position of the icon further includes:
generating and displaying a badge border for the badge.

In one embodiment, the determining the display element of the badge according to the feature information of the icon further includes:
determining one or more of a color of the badge border, a width of the badge border, and a shape of the badge border according to the feature information of the icon.

The embodiments of the present disclosure also provide a device for displaying a badge of an icon, including:
an acquisition module configured to, when generating a badge of an icon, acquire feature information of the icon;
a determination module configured to determine a display element of the badge according to the feature information of the icon; and
a display module configured to generate and display a badge having the display element at a preset position of the icon.

In one embodiment, the acquisition module is configured to, when generating a badge of an icon, acquire an application type corresponding to the icon; and the determination module is configured to determine a display element corresponding to the application type according to a preset corresponding relationship between the application type and the display element.

In one embodiment, the acquisition module is configured to, when generating a badge of an icon, acquire a priority of an application corresponding to the icon; and the determination module is configured to determine a display element corresponding to the priority of the application according to a preset corresponding relationship between the priority of the application and the display element.

In one embodiment, the acquisition module is configured to, when generating a badge of an icon, acquire a color feature of the icon; and
the determination module is configured to use the color feature as a background color of the badge; and/or use the color feature as a color of a word in the badge.

In one embodiment, the acquisition module includes:
a first color feature acquisition submodule configured to, when generating a badge of an icon, acquire a color value having a highest occurrence number among color values of all pixels in a picture file of the icon, and use the color value having the highest occurrence number as the color feature of the icon;
or, the acquisition module includes:
   a second color feature acquisition submodule configured to, when generating a badge of an icon, average color values of pixels with similar colors among all the pixels in a picture file of the icon, and use the averaged value as the color feature of the icon.

In one embodiment, when an application corresponding to the icon is an application folder, the acquisition module includes:
a first picture acquisition submodule configured to, when generating a badge of an icon, acquire all picture files of all application icons in the application folder; and
a third color feature acquisition submodule configured to use a color value having a highest occurrence number among the color values of all pixels in all the picture files as the color feature of the icon.

In one embodiment, when an application corresponding to the icon is an application folder, the acquisition module includes:
a second picture acquisition submodule configured to, when generating a badge of an icon, acquire all picture files of all application icons in the application folder; and
a fourth color feature acquisition submodule configured to average color values of pixels with similar colors among all the pixels in the picture files, and use the averaged value as the color feature of the icon.

In one embodiment, the determination module is configured to:
determine one or more of a shape of the badge, a background color of the badge, a color of a word in the badge, and a font of a word in the badge according to the feature information of the icon.

In one embodiment, the display control module is further configured to:
generate and display a badge border for the badge.

The embodiments of the present disclosure also provide a device for displaying a badge of an icon, including:
a processor; and
a memory for storing instructions executable by the processor;
wherein the processor is configured to:
   when generating a badge of an icon, acquire feature information of the icon;
   determine a display element of the badge according to the feature information of the icon; and
   generate and display a badge having the display element at a preset position of the icon.

The present invention also provides a computer program, which when executing on a processor of a terminal device, performs the above method.

The technical solutions provided by embodiments of the present disclosure may have the following beneficial effects:
in the foregoing embodiment, when generating a badge of an icon, the display element of the badge is determined according to the feature information of the icon; and the badge having the display element is generated and displayed at the preset position of the icon. Therefore, the badge of the icon can be displayed in different styles for different applications, thus helping the users to ease the visual fatigue due to inundant badges on the desktop.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for displaying a badge of an icon, according to an exemplary embodiment.
Fig. 2 is a flow chart of another method for displaying a badge of an icon, according to another exemplary embodiment.
Fig. 3 is a flow chart of further another method for displaying a badge of an icon, according to another exemplary embodiment.
Fig. 4 is a flow chart of still another method for displaying a badge of an icon, according to another exemplary embodiment.
Fig. 5 is a flow chart of still further another method for displaying a badge of an icon, according to another exemplary embodiment.
Fig. 6 is a flow chart of S501 in the method for displaying a badge of an icon, according to the exemplary embodiment shown in Fig. 5.
Fig. 7 is a flow chart of S501 in the method for displaying a badge of an icon, according to the exemplary embodiment shown in Fig. 5.
Fig. 8 is a connection diagram of a device for displaying a badge of an icon, according to an exemplary embodiment.
Fig. 9 is a connection diagram of an acquisition module in the device for displaying a badge of an icon, according to an exemplary embodiment.
Fig. 10 is a connection diagram of an acquisition module in the device for displaying a badge of an icon, according to an exemplary embodiment.
Fig. 11 is a connection diagram of an acquisition module in the device for displaying a badge of an icon, according to an exemplary embodiment.
Fig. 12 is a block diagram illustrating a device applicable for displaying a badge of an application, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

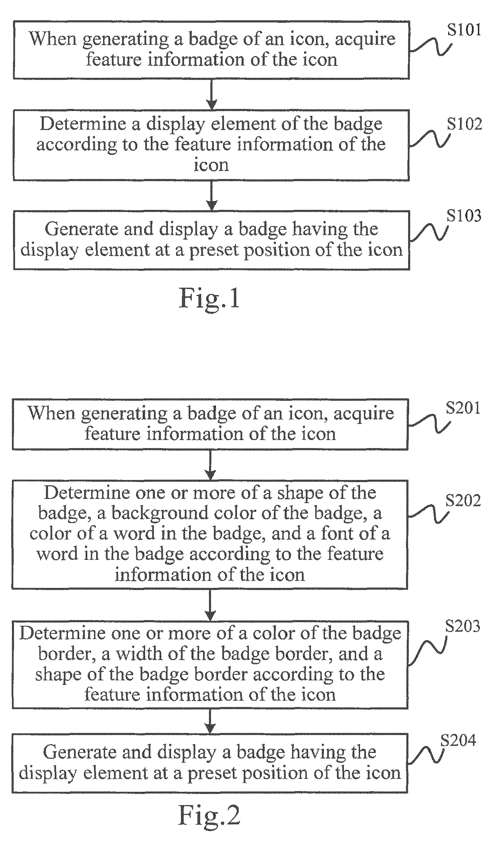

Fig. 1 is a flow chart of a method for displaying a badge of an icon, according to an exemplary embodiment. As shown in Fig. 1, the method for displaying a badge of an icon is used in a terminal device like a mobile phone, a camera, a tablet or in an application, including the following steps S101-S103.

In step S101, when generating a badge of an icon, feature information of the icon is acquired. In the step, icons of some applications are directly located on a system desktop, while icons of some applications are saved in a folder; therefore, the icon may either be an application icon, or an application folder icon, and may also be other icon. Accordingly, the badge of the icon may either be a badge of the application icon, or a badge of the application folder icon, and may also be a badge of other icon. The application icon is a shortcut icon of the application, and when the application icon is double-clicked, the application may be started.

In step S102, a display element of the badge is determined according to the feature information of the icon. The display element of the badge may include one or more of a shape of the badge, a background color of the badge, a color of a word in the badge, and a font of a word in the badge. Or, the display element of the badge may also include one or more of a color of the badge border (a border of the badge), a width of the badge border, and a shape of the badge border.

In step S103, a badge having the display element is generated and displayed at a preset position of the icon.

In the foregoing embodiment, when generating a badge of an icon, the display element of the badge is determined according to the feature information of the icon; and the badge having the display element is generated and displayed at the preset position of the icon. Therefore, the badge of the icon can be displayed in different styles for different applications, thus helping the users to ease the visual fatigue due to inundant badges on the desktop.

Fig. 2 is a flow chart of a method for displaying a badge of an icon, according to an exemplary embodiment. As shown in Fig. 2, the method for displaying a badge of an icon is used in a terminal device like a mobile phone, a camera, a tablet or in an application, including the following steps S201-S204.

In step S201, when generating a badge of an icon, feature information of the icon is acquired. In the step, icons of some applications are directly located on a system desktop, while icons of some applications are saved in a folder; therefore, the icon may either be an application icon, or an application folder icon, and may also be other icon. Accordingly, the badge of the icon may either be a badge of the application icon, or a badge of the application folder icon, and may also be a badge of other icon. The application icon is a shortcut icon of the application, and when the application icon is double-clicked, the application may be started.

In step S202, one or more of a shape of the badge, a background color of the badge, a color of a word in the badge, and a font of a word in the badge are determined according to the feature information of the icon. That is, in the step, the display element of the badge may include one or more of the shape of the badge, the background color of the badge, the color of the word in the badge, and the font of the word in the badge.

In step S203, one or more of a color of the badge border, a width of the badge border, and a shape of the badge border are determined according to the feature information of the icon. That is, in the step, the display element of the badge may further include one or more of the color of the badge border, the width of the badge border, and the shape of the badge border.

In step S204, a badge having the display element is generated and displayed at a preset position of the icon. The step further includes: generating and displaying a badge border for the badge, i.e., generating and displaying the badge border according to the color of the badge border, the width of the badge border and/or the shape of the badge border mentioned above. That is, provided that the background color of the badge is a first color (red), in order to isolate from the application icon, a second color (white) having a width of N pixels is added as the badge border for the badge.

In the foregoing embodiment, the badge border isolated from the icon may be generated so that the badge is displayed more apparently.

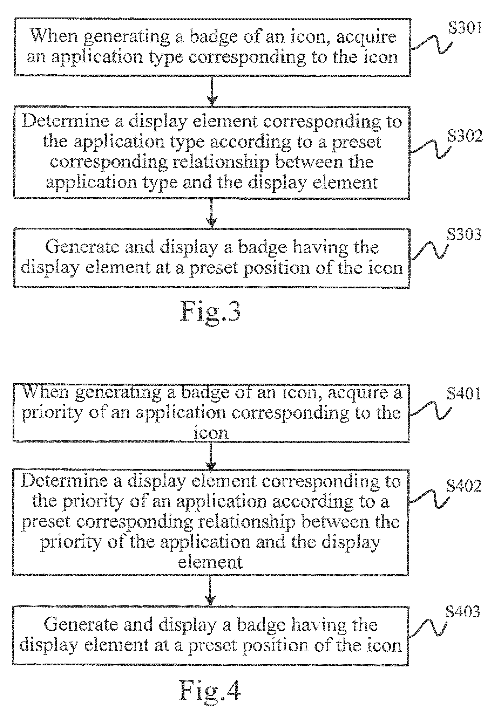

Fig. 3 is a flow chart of a method for displaying a badge of an icon, according to an exemplary embodiment. As shown in Fig. 3, the method for displaying a badge of an icon is used in a terminal device like a mobile phone, a camera, a tablet or in an application, including the following steps S301-S303.

In step S301, when generating a badge of an icon, an application type corresponding to the icon is acquired. In the step, the icon may either be an application icon, or an application folder icon, and may also be other icon. Accordingly, the badge of an icon may either be a badge of the application icon, or a badge of the application folder icon, and may also be a badge of other icon.

In step S302, a display element corresponding to an application type is determined according to a preset corresponding relationship between the application type and the display element. The display element of the badge may include one or more of a shape of the badge, a background color of the badge, a color of a word in the badge, and a font of a word in the badge according to the feature information of the icon, or the display element of the badge may also include one or more of a color of the badge border, a width of the badge border, and a shape of the badge border.

The step may include the following flow.
Firstly, application programs or application folders are classified in advance. For example, the applications may be classified into video type, communication type and working type or the like according to functions. Moreover, the applications may also be classified according to standards such as a use habit, a use frequency or a use time period of the user on the application programs, for example, the applications may be classified into working type, leisure type or the like. The type of the application folder may be determined according to types of the applications included in the application folder. For example, the application folders may be classified into video type, communication type and working type or the like. Moreover, the application folders may also be classified according to standards such as a use habit, a use frequency or a use time period of the user on the application programs in the folders, for example, the application folders may be classified into working type, leisure type or the like.

Afterwards, a corresponding relationship between different application types and different display elements of the badge is established. When a corresponding relationship between a communication application and a display element is established, a background color of the badge corresponding to the communication application is red, a color of a word in the corresponding badge is black, and a font of a word in the corresponding badge is Song typeface. When the display element of badge further includes one or more of a color of the badge border, a width of the badge border, and a shape of the badge border, the color of the badge border corresponding to the communication application is white, the corresponding width of the badge border is three pixels, and the corresponding shape of the badge border is rectangle.

After that, a display element corresponding to the application type is determined according to the preset corresponding relationship between the application type and the display element.

In step S303, a badge having the display element is generated and displayed at a preset position of the icon. For example, when the current application type is a communication type, the display element includes: a background color of the badge is red, a color of a word in the badge is black, a font of a word in the badge is Song typeface, a color of the badge border is white, a width of the badge border is three pixels, and a shape of the badge border is rectangle, and then the badge may be displayed according to the above display element.

In the foregoing embodiments, different display styles may be employed for badges of different applications according to different application types, thus improving the user experience.

Fig. 4 is a flow chart of a method for displaying a badge of an icon, according to an exemplary embodiment. As shown in Fig. 4, the method for displaying a badge of an icon is used in a terminal device like a mobile phone, a camera, a tablet or in an application, including the following steps S401-S403.

In step S401, when generating a badge of an icon, a priority of an application corresponding to the icon is acquired. In the step, the icon may either be an application icon, or an application folder icon, and may also be other icon. Accordingly, the badge of the icon may either be a badge of the application icon, or a badge of the application folder icon, and may also be a badge of other icon.

In step S402, a display element corresponding to the priority of the application is determined according to a preset corresponding relationship between the priority of the application and the display element. The display element of the badge may include one or more of a shape of the badge, a background color of the badge, a color of a word in the badge, and a font of a word in the badge; or the display element of the badge may also include one or more of a color of the badge border, a width of the badge border, and a shape of the badge border.

The step may include the following flow.
Firstly, different priorities of applications or application folders are designated in advance. For example, the priorities of one or more applications that are most frequently used by the user are set to be the highest according to a use habit or a use frequency of the user.

Afterwards, a corresponding relationship between different application priorities and different badge display styles is established. For example, a corresponding relationship is established for the application having a highest priority and a first color, for example, red (the color may be other color that is relatively prominent) as a background color of the badge; a corresponding relationship is established for the application having the highest priority and a second color, for example, black as a color of a word in the badge; a corresponding relationship is established for the application having the highest priority and a first shape, for example, rhombus as a shape of the badge; and a corresponding relationship is established for the application having the highest priority and a first typeface, for example, Song typeface as a font of a word in the badge. The step may further include: setting a color of the badge border corresponding to the application having the highest priority as grey, setting a width of the corresponding badge border as four-pixel width, and setting a shape of the corresponding badge border as rhombus.

After that, a display element corresponding to the priority of the application is determined according to a preset corresponding relationship between the priority of the application and the display element.

In step S403, a badge having the display element is generated and displayed at a preset position of the icon. For example, when generating a badge of the application having the highest priority, the first color is used as the background color of the badge; the second color is used as the color of the word in the badge; the first shape, for example, rhombus is used as the shape of the badge; and the first typeface, for example, Song typeface is used as the font of the word in the badge. The step may further include: when generating the badge of the application having the highest priority, using grey as the color of the badge border, using four-pixel width as the width of the badge border, and using rhombus as the shape of the badge border.

In the foregoing embodiment, badges having different display elements may be employed for different applications according to different application priorities.

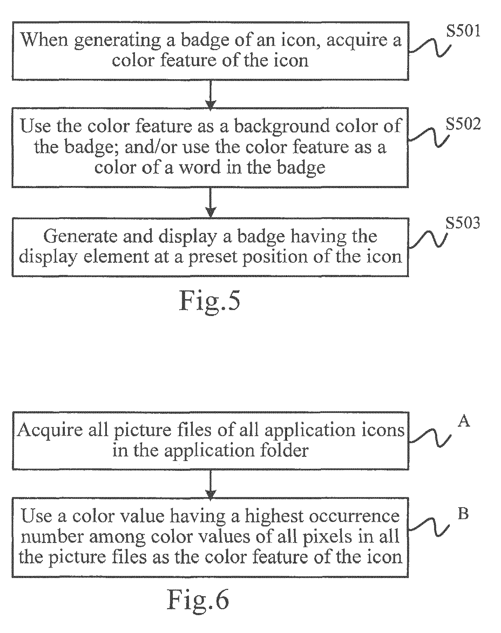

Fig. 5 is a flow chart of a method for displaying a badge of an icon, according to an exemplary embodiment. As shown in Fig. 5, the method for displaying a badge of an icon is used in a terminal device like a mobile phone, a camera, a tablet or in an application, including the following steps S501-S503.

In step S501, when generating a badge of an icon, a color feature of the icon is acquired. In the step, the icon may either be an application icon, or an application folder icon, and may also be other icon. Accordingly, the badge of the icon may either be a badge of the application icon, or a badge of the application folder icon, and may also be a badge of other icon.

In step S502, the color feature is used as a background color of the badge; and/or the color feature is used as a color of a word in the badge. In the present embodiment, the display element may include the background color of the badge and/or the color of a word in the badge, and the display element is not limited thereto. For example, a color value having a highest occurrence number is used as a representative color, and the representative color is designated as a color of a lower layer of the badge (background) of the application.

In step S503, a badge having the display element is generated and displayed at a preset position of the icon.

In the foregoing embodiment, different display styles may be employed for different application badges according to the color features of pictures of the application icons.

In one embodiment, the step S501 includes:
acquiring a color value having a highest occurrence number among color values of all pixels in a picture file of the icon, and using the color value having the highest occurrence number as the color feature of the icon.

The foregoing embodiment is applied to a circumstance that the icon is an application icon, i.e., the application corresponding to the icon is an application program. In the embodiment, a color value having a highest occurrence number is used as a representative color, and the representative color is designated as a color of the lower layer of the badge (background) of the application, or as a color of the word in the badge.

In one embodiment, the step S501 includes:
averaging color values of pixels with similar colors among all the pixels in the picture files of the icon, and using the averaged value as the color feature of the icon.

The foregoing embodiment is applied to a circumstance that the icon is an application icon, i.e., the application corresponding to the icon is an application program. The averaging the similar colors in the step is applicable to a circumstance that there are mainly gradient colors in the icon. That is, it is applicable to a circumstance in which the similar gradient colors occupy most of an area of the icon, the number of pixels having the same color is relatively less, and the number of pixels having similar colors is relatively more due to the gradual change of color.

In one embodiment, when an application corresponding to the icon is an application folder, as shown in Fig. 6, the step S501 includes the following steps.

In step A, all picture files of all application icons in the application folder are acquired.

In step B, a color value having a highest occurrence number among the color values of all pixels in all the picture files is used as the color feature of the icon.

The foregoing embodiment is applicable to a circumstance that the icon is an application folder, i.e., the application corresponding to the icon is an application folder. In the embodiment, a color value having a highest occurrence number is used as a representative color, and the representative color is designated as a color of the lower layer of the badge (background) of the application, or as a color of a word in the badge.

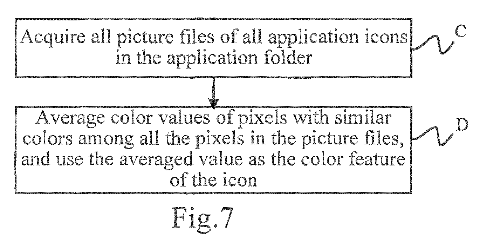

In one embodiment, when an application corresponding to the icon is an application folder, as shown in Fig. 7, the step S501 includes the following steps.

In step C, all picture files of all application icons in the application folder are acquired.

In step D, color values of pixels with similar colors among all the pixels in the picture files are averaged, and the averaged value is used as the color feature of the icon.

The foregoing embodiment is applicable to a circumstance that the icon is an application folder, i.e., the application corresponding to the icon is an application folder. The averaging the similar colors in the step is applicable to a circumstance that there are mainly gradient colors in the icon. That is, it is applicable to a circumstance in which the gradient colors occupy most of the area of the icon, but due to the gradual change of color, the pixels having the same color in the icon are relatively less, and the pixels having similar colors are relatively more.

The application scenario of the present disclosure is described hereinafter. The application scenario can help the users to improve the visual fatigue on badges on the desktop. In the application scenario of the present disclosure, the color of the badge is automatically changed according to the color of the application icon; in this way, there will not be badges having a single color on the desktop from the angle of the entire desktop; instead, there are various badge colors in accordance with the corresponding applications, so as to ease the visual fatigue of the users due to inundant badges on the desktop.

With regard to a circumstance that the APP (application program) icon is directly displayed on the desktop, the method includes the following steps.

In step 1, a system selects colors according to an icon of an application on the desktop. To be specific, the system reads a picture file of the icon of the application on the desktop, and analyzes and obtains one color value having a highest occurrence number among color values of all pixels in the picture file of the icon. The color value is returned and used as a result of color selection (representative color) of the system from the application icon.

In step 2, the system designates the color as a color of a lower layer of the application badge according to the result of color selection. Meanwhile, in order to be isolated from the application icon, the system adds a white border having a three-pixel width for the badge as a badge border. That is, because the representative color among the colors of the application icon itself is used in the badge, a border may be added on the periphery of the badge for isolation, so that the badge is more significant.

The application scenario has the following advantageous effects.

With regard to the problem of single badge color system in the current mobile phone operating system, the application scenario improves the problems of visual fatigue caused by the badges on the desktop and low notification efficiency thereof, and improves the usage experience of the users.

Moreover, the application scenario optimizes a single and uniform badge color system in the current desktop, provides badges with different colors according to different features of the application programs, reduces the visual fatigue of the users, increases the notification efficiency, and improves the usage experience of the users.

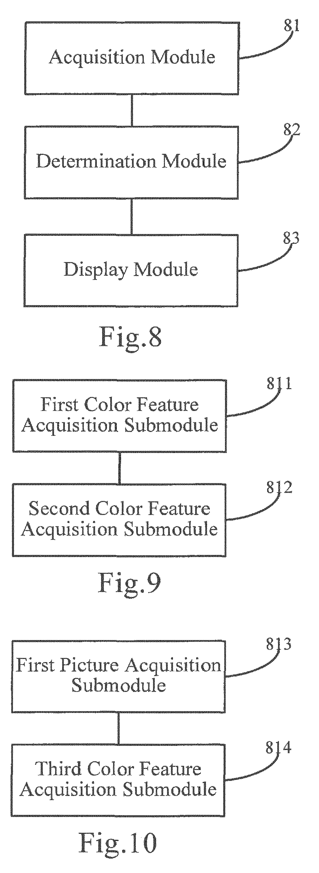

Fig. 8 is a flow chart of a device for displaying a badge of an icon, according to an exemplary embodiment, including:
an acquisition module 81 configured to, when generating a badge of an icon, acquire feature information of the icon;
a determination module 82 configured to determine a display element of the badge according to the feature information of the icon; and
a display module 83 configured to generate and display a badge having the display element at a preset position of the icon.

The acquisition module 81 is configured to, when generating a badge of an icon, acquire an application type corresponding to the icon.

The determination module 82 is configured to determine a display element corresponding to the application type according to a preset corresponding relationship between the application type and the display element.

In one embodiment, the acquisition module 81 is configured to, when generating a badge of an icon, acquire a priority of an application corresponding to the icon.

The determination module 82 is configured to determine a display element corresponding to the priority of the application according to a preset corresponding relationship between the priority of the application and the display element.

In one embodiment, the acquisition module 81 is configured to, when generating a badge of an icon, acquire a color feature of the icon.

The determination module 82 is configured to use the color feature as a background color of the badge; and/or use the color feature as a color of a word in the badge.

In one embodiment, as shown in Fig. 9, the acquisition module 81 includes:
a first color feature acquisition submodule 811 configured to, when generating a badge of an icon, acquire a color value having a highest occurrence number among the color values of all pixels in a picture file of the icon, and use the color value having the highest occurrence number as the color feature of the icon.

In one embodiment, as shown in Fig. 9, the acquisition module 81 includes:
a second color feature acquisition submodule 812 configured to, when generating a badge of an icon, average the color values of pixels with similar colors among all the pixels in the picture file of the icon, and use the averaged value as the color feature of the icon.

In one embodiment, when an application corresponding to the icon is an application folder, as shown in Fig. 10, the acquisition module 81 includes:
a first picture acquisition submodule 813 configured to, when generating a badge of an icon, acquire all picture files of all application icons in the application folder; and
a third color feature acquisition submodule 814 configured to use a color value having a highest occurrence number among the color values of all pixels in all the picture files as the color feature of the icon.

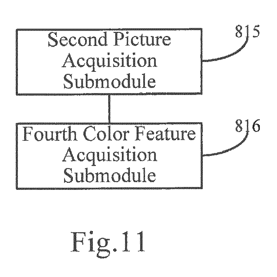

In one embodiment, when an application corresponding to the icon is an application folder, as shown in Fig. 11, the acquisition module 81 includes:
a second picture acquisition submodule 815 configured to, when generating a badge of an icon, acquire all picture files of all application icons in the application folder; and
a fourth color feature acquisition submodule 816 configured to average the color values of pixels with similar colors among all the pixels in the picture files, and use the averaged value as the color feature of the icon.

The determination module 82 is configured to:
determine one or more of a shape of the badge, a background color of the badge, a color of a word in the badge, and a font of a word in the badge according to the feature information of the icon.

The display module 83 is further configured to: generate and display a badge border for the badge.

With respect to the devices in the above embodiments, the specific manners for performing operations for individual modules therein have been described in detail in the embodiments regarding the methods, which will not be elaborated herein.

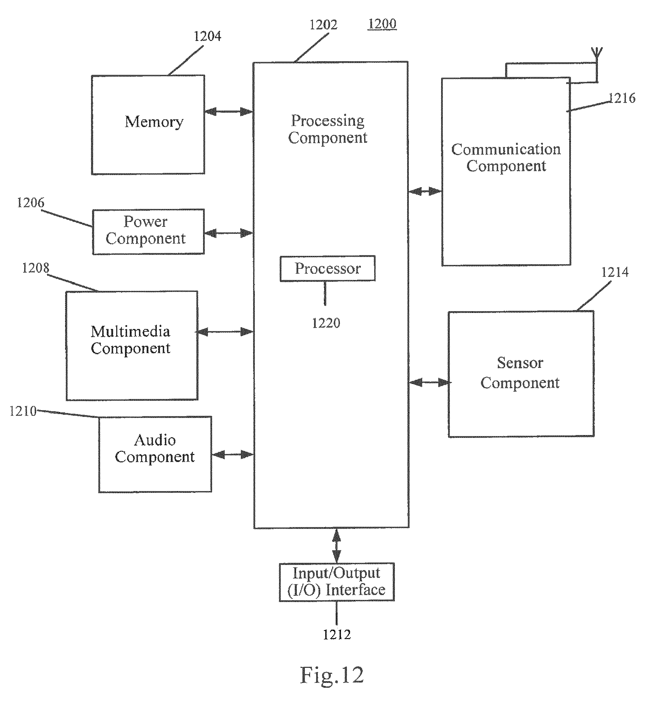

Fig. 12 is a block diagram of a device 1200 for displaying application badge, according to an exemplary embodiment. The device is applied to a terminal device. For example, the device 1200 may be a mobile phone, a computer, a digital broadcast terminal, a messaging device, a gaming console, a tablet, a medical device, exercise equipment, a personal digital assistant, and the like.

Referring to Fig. 12, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and/or the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a device for displaying application badge, including:
a processor; and
a memory for storing instructions executable by the processor;
wherein the processor is configured to:
   when generating a badge of an icon, acquire feature information of the icon;
   determine a display element of the badge according to the feature information of the icon; and
   generate and display the badge having the display element at a preset position of the icon.

In exemplary embodiments, there is also provided a non-transitory computer-readable storage medium including instructions, such as included in the memory 1204, executable by the processor 820 in the device 1200, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium is executed by a processor of the mobile terminal, enables the terminal device to perform the method for displaying application badge, the method including:
when generating a badge of an icon, acquiring feature information of the icon;
determining a display element of the badge according to the feature information of the icon; and
generating and displaying the badge having the display element at a preset position of the icon.

## Claims

1. A method for displaying a badge of an icon, comprising:
when generating a badge of an icon, acquiring (S101, S201) feature information of the icon;
determining (S102) a display element of the badge according to the feature information of the icon; and
generating and displaying (S103, S204, S303, S403, S503) a badge having the display element at a preset position of the icon.

2. The method according to claim 1, wherein:
the acquiring (S101, S201) the feature information of the icon comprises:
acquiring (S301) an application type corresponding to the icon; and
the determining (S102) the display element of the badge according to the feature information of the icon comprises:
determining (S302) a display element corresponding to the application type according to a preset corresponding relationship between the application type and
the display element.

3. The method according to claim 1, wherein:
the acquiring (S101, S201) the feature information of the icon comprises:
acquiring (S401) a priority of an application corresponding to the icon; and
the determining (S102) the display element of the badge according to the feature information of the icon comprises:
determining (S402) a display element corresponding to the priority of the application according to a preset corresponding relationship between the priority of the application and the display element.

4. The method according to claim 1, wherein:
the acquiring (S101, S201) the feature information of the icon comprises:
acquiring (S501) a color feature of the icon; and
the determining (S102) the display element of the badge according to the feature information of the icon comprises:
using the color feature as a background color of the badge; and/or
using the color feature as a color of a word in the badge (S502).

5. The method according to claim 4, wherein the acquiring (S501) the color feature of the icon comprises:
acquiring a color value having a highest occurrence number among color values of all pixels in a picture file of the icon, and using the color value having the highest occurrence number as the color feature of the icon (B); or
averaging color values of pixels with similar colors among all pixels in a picture file of the icon, and using the averaged value as the color feature of the icon (D).

6. The method according to claim 4, wherein when an application corresponding to the icon is an application folder, the acquiring (S501) the color feature of the icon comprises:
acquiring (A) all picture files of all application icons in the application folder; and using (B) a color value having a highest occurrence number among color values of all pixels in all the picture files as the color feature of the icon; or
acquiring (C) all picture files of all application icons in the application folder; and averaging (D) color values of pixels with similar colors among all pixels in the picture files, and using the averaged value as the color feature of the icon.

7. The method according to claim 1, wherein the determining (S102) the display element of the badge according to the feature information of the icon comprises: determining (S202) one or more of a shape of the badge, a background color of the badge, a color of a word in the badge, and a font of a word in the badge according to the feature information of the icon.

8. The method according to claim 1, wherein the generating and displaying (S103, S204, S303, S403, S503) the badge having the display element at the preset position of the icon further comprises:
generating and displaying a badge border for the badge.

9. The method according to claim 8, wherein the determining (S102) the display element of the badge according to the feature information of the icon further comprises:
determining (S203) one or more of a color of the badge border, a width of the badge border, and a shape of the badge border according to the feature information of the icon.

10. A device for displaying a badge of an icon, comprising:
an acquisition module (81) configured to, when generating a badge of an icon, acquire feature information of the icon;
a determination module (82) configured to determine a display element of the badge according to the feature information of the icon; and
a display module (83) configured to generate and display a badge having the display element at a preset position of the icon.

11. The device according to claim 10, wherein:
the acquisition module (81) is configured to, when generating a badge of an icon, acquire an application type corresponding to the icon; and
the determination module (82) is configured to determine a display element corresponding to the application type according to a preset corresponding relationship between the application type and the display element.

12. The device according to claim 10, wherein:
the acquisition module (81) is configured to, when generating a badge of an icon, acquire a priority of an application corresponding to the icon; and
the determination module (82) is configured to determine a display element corresponding to the priority of the application according to a preset corresponding relationship between the priority of the application and the display element.

13. The device according to claim 10, wherein:
the acquisition module (81) is configured to, when generating a badge of an icon, acquire a color feature of the icon; and
the determination module (82) is configured to use the color feature as a background color of the badge; and/or use the color feature as a color of a word in the badge.

14. The device according to claim 13, wherein:
the acquisition module (81) comprises:
a first color feature acquisition submodule (811) configured to, when generating a badge of an icon, acquire a color value having a highest occurrence number among color values of all pixels in a picture file of the icon, and use the color value having the highest occurrence number as the color feature of the icon;
or, the acquisition module (81) comprises:
a second color feature acquisition submodule (812) configured to, when generating a badge of an icon, average color values of pixels with similar colors among all pixels in a picture file of the icon, and use the averaged value as the color feature of the icon.

15. The device according to claim 13, wherein when an application corresponding to the icon is an application folder, the acquisition module (81) comprises:
a first picture acquisition submodule (813) configured to, when generating a badge of an icon, acquire all picture files of all application icons in the application folder; and
a third color feature acquisition submodule (814) configured to use a color value having a highest occurrence number among color values of all pixels in all the picture files as the color feature of the icon.

16. The device according to claim 13, wherein when an application corresponding to the icon is an application folder, the acquisition module (81) comprises:
a second picture acquisition submodule (815) configured to, when generating a badge of an icon, acquire all picture files of all application icons in the application folder; and
a fourth color feature acquisition submodule (816) configured to average color values of pixels with similar colors among all pixels in all picture files, and use the averaged value as the color feature of the icon.

17. The device according to claim 10, wherein the determination module (82) is configured to:
determine one or more of a shape of the badge, a background color of the badge, a color of a word in the badge, and a font of a word in the badge according to the feature information of the icon.
